# EUROPÄISCHE PATENTSCHRIFT

(11) **EP 1 644 779 B1**
(45) Veröffentlichungstag und Bekanntmachung des Hinweises auf die Patenterteilung: **03.10.2018**
(21) Anmeldenummer: 04740888.5
(22) Anmeldetag: 09.07.2004
(51) Int. Cl.: G03H 1/08, G03H 1/18, G03H 1/22, G03H 1/02

(54) **VERFAHREN ZUM BERECHNEN UND ZUM ERZEUGEN EINES COMPUTERGENERIERTEN HOLOGRAMMS SOWIE SPEICHERMEDIUM MIT EINEM SOLCHEN HOLOGRAMM UND EINE LESEVORRICHTUNG ZUR DESSEN LESUNG**
METHOD FOR CALCULATING AND PRODUCING A COMPUTER-GENERATED HOLOGRAM, STORAGE MEDIUM COMPRISING ONE SUCH HOLOGRAM, AND READING DEVICE FOR READING THE SAME
PROCEDE DE CALCUL ET DE PRODUCTION D'UN HOLOGRAMME CREE PAR ORDINATEUR, SUPPORT DE STOCKAGE COMPORTANT UN HOLOGRAMME CREE PAR ORDINATEUR ET DISPOSITIF DE LECTURE

(30) Priorität: 11.07.2003 DE 10331737
(43) Veröffentlichungstag der Anmeldung: 12.04.2006
(73) Patentinhaber: tesa scribos GmbH, 69126 Heidelberg (DE)
(72) Erfinder: BORGSMÜLLER, Stefan, 69126 Heidelberg (DE); SCHULTE-WIEKING, Kay, 69115 Heidelberg (DE); NOEHTE, Steffen, 69469 Weinheim (DE)
(74) Vertreter: Cohausz & Florack
(86) Internationale Anmeldenummer: PCT/EP2004/007612
(87) Internationale Veröffentlichungsnummer: WO 2005/008345

(56) Entgegenhaltungen:
- EP-A2- 0 420 261
- WO-A-94/06097
- WO-A-94/28444
- WO-A-99/56182
- WO-A-02/084405
- WO-A-02/084411
- WO-A-03/014836
- US-A- 4 129 382
- US-A- 4 171 864
- US-A- 5 422 744
- US-A- 5 986 781
- FERRI L C: "Visualization of 3D information with digital holography using laser printers" COMPUTERS AND GRAPHICS, PERGAMON PRESS LTD. OXFORD, GB, Bd. 25, Nr. 2, April 2001 (2001-04), Seiten 309-321, XP004232470 ISSN: 0097-8493 -& DE 198 06 295 A (FRAUNHOFER GES FORSCHUNG) 19. August 1999 (1999-08-19)
- LU ET AL: "Compact, reliable asymmetric optical configuration for cost-effective fabrication of multiplex dot matrix hologram in anti-counterfeiting applications", OPTIK, WISSENSCHAFTLICHE VERLAG GMBH, DE LNKD- DOI:10.1078/0030-4026-00241, vol. 114, no. 4, 1 April 2003 (2003-04-01) , pages 161-167, XP005256432, ISSN: 0030-4026

## Beschreibung

Die Erfindungbetrifft ein Verfahren zum Berechnen und Verknüpfen der Punkteverteilungen einer makroskopischen Überstruktur und eines computergenerierten Hologramms.

Computergeneriertee Hologramme sind zweidimensionale Hologramme, die aus einzelnen Punkten mit unterschiedlichen optischen Eigenschaften bestehen und aus denen bei Beleuchtung mit einer kohärenten elektromagnetischen Welle, insbesondere Lichtwelle durch Beugung in Transmission oder Reflexion Bilder und/oder Daten reproduziert werden. Die unterschiedlichen optischen Eigenschaften der einzelnen Punkte können Reflexionseigenschaften beispielsweise durch Oberflächentopographie, variierende optische Weglängen im Material des Speichermediums (Brechungsindizes) oder Farbwerte des Materials sein.

Die optischen Eigenschaften der einzelnen Punkte werden von einem Computer berechnet, es handelt sich somit um so genannte computergenerierte Hologramme (CGH). Mit Hilfe eines fokussierten Schreibstrahls werden während des Schreibens des Hologramms die einzelnen Punkte des Hologramms in das Material des Speichermediums eingeschrieben, wobei der Fokus im Bereich der Oberfläche oder im Material des Speichermediums liegt. Eine Fokussierung bewirkt im Bereich des Fokus eine geringe Einwirkungsfläche auf das Material des Speichermediums, so dass eine Vielzahl von Punkten des Hologramms in einem kleinen Bereich geschrieben werden kann. Die optische Eigenschaft des jeweils geschriebenen Punktes hängt dabei von der Intensität des Schreibstrahls ab. Dazu wird der Schreibstrahl in zwei Dimensionen mit variierender Intensität über die Oberfläche des Speichermediums oder innerhalb des Volumens, beispielsweise in einer mit einem transparenten Schutz versehenen Lage (Layer) gescannt. Die Modulation der Intensität des Schreibstrahls erfolgt dabei entweder über eine interne Modulation der Lichtquelle, beispielsweise eine Laserdiode, oder über eine externe Modulation eines Schreibstrahls außerhalb der Lichtquelle, beispielsweise mit Hilfe von optoelektronischen Elementen. Darüber hinaus kann die Lichtquelle als gepulster Laser ausgebildet sein, dessen Pulslängen steuerbar sind, so dass über die Pulslängen eine Steuerung der Pulsenergie des Schreibstrahls erfolgen kann.

Durch das Abscannen des intensitätsmodulierten Schreibstrahls entsteht somit eine oder mehrere Flächen mit einer unregelmäßigen Punkteverteilung, das oder die computergenerierten Hologramme. Dieses kann zum Kennzeichnen und Individualisieren beliebiger Gegenstände eingesetzt werden.

Scannende lithographische Systeme zur Herstellung von computergenerierten Hologrammen sind an sich bekannt. Hier sind sowohl laserlithographische- als auch elektronenstrahl- oder andere lithographische Systeme gemeint. Laserlithographischen Systeme sind in der Lage eine Auflösung von etwa 25.000 dpi auf einer Fläche von 1 bis 25 mm² zu erreichen. Die Schreibgeschwindigkeit beträgt etwa 1 Mpixel/s, damit jeweils ein Hologramm in einer Zeit von ca. 1s geschrieben werden kann. Jedes computergenerierte Hologramm kann nur mit Hilfe eines Lesestrahls ausgelesen werden, die Oberfläche des Hologramms an sich weist keine direkt sichtbare und erkennbare Information auf. Aus diesem Grund ist bisher eine Einführung und Verbreitung von computergenerierten Hologrammen in den Anwendungsbereichen schwierig gewesen, in denen direkt auslesbare Informationen, beispielsweise ein 1D- oder 2D-Barcode, Verwendung gefunden haben. Denn ein Systemwechsel von einer Auslesetechnik zu einer anderen neuen Auslesetechnik erfordert immer einen Übergangszeitraum, in dem beide Anwendungen gleichzeitig genutzt werden können.

In der DE 198 06 295 A1 ist ein Verfahren zum Berechnen eines computergenerierten Hologramms beschrieben, bei dem die Punkteverteilung des computergenerierten Hologramms berechnet wird und bei dem die Punkteverteilung einer direkt lesbaren makroskopischen Überstruktur vorliegt. Zudem wird die makroskopische Überstruktur berechnet und die Punkteverteilung des computergenerierten Hologramms mit der Punkteverteilung der makroskopischen Überstruktur zu einer in einem Speichermedium zu schreibenden Punkteverteilung verknüpft. Die WO 02/084411 A1 betrifft ein Verfahren zum Erzeugen eines computergenerierten Hologramms, bei dem das computergenerierte Hologramm mit einem Raster versehen wird, welches Rückschlüsse auf das Schreibgerät zulässt, mit dem das computergenerierte Hologramm geschrieben wurde. In der WO 03/014836 A2 wird das Erzeugen eines in sehr kleine Segmente unterteilten Speichermediums beschrieben, wobei die Segmente des Speichermediums sowohl diffraktive als auch nicht diffraktive Bereiche umfassen. Die WO 94/28444 A1 beschreibt ein Verfahren, bei dem Hologramme in eine Vielzahl von Segmenten unterteilt werden und bei dem Segmente beider Hologramme zu einem neuen Hologramm kombiniert werden. Die US 5 986 781 A betrifft ein Verfahren und eine Vorrichtung zum Erzeugen von hochauflösenden diffraktiven graphischen Informationen. Ferner wird in dem Artikel "Compact, reliable asymmetric optical configuration for cost-effektive fabrication of multiplex dot matrix hologram in anti-counterfeiting applications" von Ying Tsung Lu und Shien Chi in Optik 114, No. 4 (2003) S. 161-167 eine Kombination mehrerer Dotmatrix-Hologramme angegeben. Dabei wird die zu beschreibende Fläche in viele Einzelsegmente aufgeteilt und in jedem Einzelsegment nebeneinander jeweils ein Dot jedes Dotmatrix-Hologramms geschrieben.

Der Erfindung liegt daher das technische Problem zugrunde, das Berechnen und das Herstellen eines computergenerierten Hologramms weiter zu verbessern, so dass eine Kombination mit direkt erkennbaren Bildern in der Struktur der Punkteverteilung ermöglicht wird.

Gemäß einer ersten Lehre der vorliegenden Erfindung wird das zuvor aufgezeigte technische Problem durch ein Verfahren nach Anspruch 1 gelöst.

Dabei kann der Schreibstrahl relativ zu dem feststehenden Speichermedium bewegt werden oder das Speichermedium wird bei feststehendem Schreibstrahl relativ zum Schreibstrahl bewegt.

Erfindungsgemäß ist also erkannt worden, dass sowohl ein computergeneriertes Hologramm als auch eine makroskopische Überstruktur, die direkt lesbare Informationen enthalten kann, in einer Punkteverteilung zusammengeführt werden können.

Ein Vorteil liegt darin, dass sowohl herkömmliche Barcodelesegeräte als auch Lesegeräte für computergenerierte Hologramme verwendet werden können.

Gleichzeitig kann einem Barcode Zusatzfunktionen mitgegeben werden. Der Barcode weist für sich keine Sicherheitsaspekte auf, jedoch wird durch die untrennbare Kombination mit dem computergenerierten Hologramm ein Authentifikationsmerkmal integriert.

Die Kombination des computergenerierten Hologramms mit einer makroskopische Überstruktur bietet verschiedene Möglichkeiten von Kombinationen von Eigenschaften des computergenerierten Hologramms, der Art der Verknüpfung und der makroskopischen Überstruktur, wobei immer ein Hologrammtyp über eine Verknüpfung mit einer makroskopischen Überstruktur kombiniert wird.

Zum einen können verschiedene Arten von computergenerierten Hologrammen verwendet werden. Das sind beispielsweise alle computergenerierten Fourier-, Kinoform- und Fresnel-Hologramme als verschiedene zu kombinierende Hologrammtypen.

Zum anderen finden als makroskopische Überstrukturen 1D- oder 2D-Barcodes, Mikroschriften, Bilder, Logos oder kodierte Matrizen Anwendung. Kodierte Matrizen sind zweidimensionale Datenbityrrays, wobei die Kodierung und/oder Anordnung der Datenbits beliebige Forman annehmen kann.

Entscheidend für die Ausgestaltung der in das Speichermedium zu schreibenden Punkteverteilung ist die Art der Verknüpfung. Erfindungsgemäß wird eine der folgenden logischen Verknüpfungen zwischen der Punkteverteilung des computergenerierten Hologramms und der Punkteverteilung der makroskopischen Überstruktur angewendet: AND, NAND, OR oder NOR-Verknüpfung.

Das bedeutet beispielsweise, dass ein im computergenerierten Hologramm enthaltener zu schreibender Punkt nur dann geschrieben wird, wenn dieser Punkt auch in der makroskopischen Überstruktur enthalten ist. Mit anderen Worten kann die Verknüpfung dadurch realisiert werden, dass dann ein Punkt in der zu schreibenden Punkteverteilung gesetzt wird, wenn sowohl in der Punkteverteilung des computergenerierten Hologramms als auch in der Punkteverteilung der makroskopischen Überstruktur an der gleichen Position ein Punkt vorhanden ist (AND-Verknüpfung).

Ebenso kann auch vorgesehen sein, dass ein imcomputergenerierten Hologramm enthaltener zu schreibender Punkt dann nicht geschrieben wird, wenn dieser Punkt auch in der makroskopischen Überstruktur geschrieben werden soll. Mit anderen Worten kann die Verknüpfung dadurch realisiert werden, dass dann ein Punkt in der zu schreibenden Punkteverteilung ausgelassen wird, wenn dieser Punkt in der Punkteverteilung der makroskopischen Überstruktur vorhanden ist. Die Punkteverteilung der makroskopischen Überstruktur erscheint dann als negatives Bild in der zu schreibenden Punkteverteilung (NAND-Verknüpfung).

Ebenso ist es möglich beispielsweise dann einen Punkt in der zu schreibenden Punkteverteilung zu setzen, wenn entweder in der Punkteverteilung des computergenerierten Hologramms oder in der Punkteverteilung der makroskopischen Überstruktur an der gleichen Position ein Punkt vorhanden ist (OR-Verknüpfung).

Ebenso kann die Verknüpfung dadurch realisiert werden, dass dann ein Punkt in der zu schreibenden Punkteverteilung ausgelassen wird, wenn entweder in der Punkteverteilung des computergenerierten Hologramms oder in der Punkteverteilung der makroskopischen Überstruktur an der gleichen Position ein Punkt vorhanden ist (NOR-Verknüpfung).

In weiter bevorzugter Weise kann die Punkteverteilung der makroskopischen Überstruktur selbst ein computergeneriertes Hologramm enthalten, so dass neben dem ersten computergenerierten Hologramm und der makroskopischen Überstruktur eine weitere holographische Information in der Punkteverteilung enthalten ist. Dadurch kann die Tiefe der Kodierung der in der Punkteverteilung enthaltenen Information nochmals vergrößert werden.

Unter einem computergenerierten Dotmatrix-Hologramm wird ein Dotmatrix-Hologramm verstanden, bei dem die Beugungsgitter der einzelnen Dots nicht durch eine Überlagerung von zwei Laserstrahlen im Material des Speichermediums erzeugt werden, sondern bei dem die Beugungsgitter jeweils durch ein Punktraster innerhalb einer größeren Punkteverteilung gebildet werden. Daher lassen sich computergenerierte Dotmatrix-Hologramme in einfacher Weise mit der Punkteverteilung eines computergenerierten Hologramms kombinieren, da beide auf der Basis einer Punkteverteilung berechnet und geschrieben werden können.

Bei den zuvor beschriebenen Verknüpfungen enthält die zu schreibende Punkteverteilung einerseits Bereiche, in denen die Punkteverteilung des computergenerierten Hologramms vorhanden ist, und andererseits Bereiche, in denen die Punkteverteilung der makroskopischen Überstruktur vorhanden ist. Es kann weiterhin auch Bereiche geben, in denen die beiden verschiedenen Punktestrukturen nebeneinander bzw. übereinander existieren. Somit kann, wenn auch mit reduzierter Qualität, das computergenerierte Hologramm mittels eines Lesestrahls ausgelesen werden, während gleichzeitig die makroskopische Überstruktur direkt lesbar in der zu schreibenden Punkteverteilung erkennbar ist.

Die Anwendung mit einer makroskopischen Überstruktur in Form eines 1D- oder 2D-Barcodes ist besonders vorteilhaft, da bestehende Systeme, die auf die Anwendung von Barcodes eingerichtet sind, schrittweise für eine Anwendung computergenerierter Hologramme umgerüstet werden können, oder von vornherein der in das Hologramm eingebettete Barcode direkt gelesen werden kann. Denn während einer Übergangszeit sind Labels, die das computergenerierte Hologramm kombiniert mit der makroskopische Überstruktur in Form eines Barcodes aufweisen, sowohl über den Barcode als auch über die holographische Information auslesbar. Die Labels ermöglichen daher eine Abwärtskompatibilität zwischen verschiedenen Systemen. Grundsätzlich kann auch ein Optimierungsprozess zur Verbesserung der Qualität der Rekonstruktion eingesetzt werden. Für die Optimierung der Punkteverteilung wird ein iterativer Fourier-Transformationsalgorithmus, vorzugsweise ein Gradual and Random Binarization Algorithmus, angewendet.

Dazu wird in der Ebene der Punkteverteilung des Hologramms eine Quantisierungsoperation angewendet, d.h. eine Grauwerteverteilung wird quantisierten und definierten Grauwerten zugeordnet. Die bevorzugte Variante besteht in der binäre Quantisierung, also der Zuordnung in schwarze und weiße Werte.

Des weiteren kann bei der Optimierung in der Ebene der Punkteverteilung des Hologramms eine Beschneidung der Punkteverteilung auf die vorgesehen Form innerhalb der gesamten Punkteverteilung vorgenommen werden. In einem der oben beschriebenen Beispiele wird also die Punkteverteilung des Hologramms auf die binäre Form eines 2D-Barcodes reduziert und mit in die Berechnung bzw. Optimierung des Hologramms einbezogen. Der mit einem Entfernen von Teilbereichen eines fertig berechneten Hologramms verbundene Informationsverlust wird dadurch erheblich reduziert.

Bei der Optimierung kann weiterhin in der Ebene der Rekonstruktion die sich ergebende Rekonstruktion durch die gewünschte Rekonstruktion ersetzt werden. Durch die nachfolgende Rückberechnung während des nächsten Iterationsschrittes wird somit die optimale Information eingefügt.

Die optimierte zusammengesetzte Punkteverteilung kann grundsätzlich aus mindestens zwei verschiedenen Hologrammen erneut durch einen iterativen Fourier-Transformationsalgorithmus optimiert werden, wobei in der Ebene der Punkteverteilung die gesamte Punkteverteilung und in der Ebene der Rekonstruktion die Rekonstruktion der Kombination angesetzt wird. Daraus entsteht eine zweifach optimierte Punkteverteilung.

Im Übrigen kann eine Vorrichtung zum Auslesen eines in einem Speichermedium gespeicherten Hologramms mit einer Strahlungsquelle zum Erzeugen eines Lesestrahls aus elektromagnetischer Strahlung mit einem im Strahlengang des Lesestrahls angeordneten Speichermedium, wobei der Lesestrahl die vom Hologramm eingenommene Fläche zumindest teilweise ausleuchtet, mit Aufnahmemitteln zum Aufnehmen des vomHologramm erzeugten Bildes und mit einem optischen System für ein Erfassen der makroskopischen Überstruktur der Punkteverteilung der vom Hologramm eingenommenen Fläche vorgesehen werden.

Durch diese Vorrichtung kann eine Punkteverteilung ausgelesen werden, die einerseits eine holographische Information enthält und anderseits eine makroskopische Überstruktur aufweist, die direkt lesbar ist. Durch die separaten Aufnahmemittel werden die unterschiedlichen Informationen aufgenommen und einer getrennten Auswertung zugeführt.

Das optische System kann eine Abbildungsoptik und zweite Aufnahmemittel aufweisen. Die Abbildungsoptik ist für ein Abbilden der Punkteverteilung der vom Hologramm eingenommenen Fläche vorgesehen und die zweiten Aufnahmemittel sind zum Aufnehmen der Punkteverteilung vorgesehen. Somit kann durch das optische System die makroskopische Überstruktur zumindest in Teilbereichen, vorzugsweise aber gesamt aufgenommen werden, um beispielsweise das Bild, das Muster (2D-Barcode) oder die Mikroschrift vollständig zu erfassen.

Die ersten Aufnahmemittel können mindestens zwei voneinander getrennte Aufnahmebereiche für ein Aufnehmen von mindestens zwei unterschiedlichen Bildern des Hologramms aufweisen. Dadurch können zwei unterschiedliche holographische Informationen, die in der Punkteverteilung enthalten sind, gleichzeitig, aber getrennt aufgenommen werden. Dadurch ist es möglich, dass die verschiedenen holographischen Informationen unterschiedlichen Sicherheitsstufen zugeordnet werden können. Beispielsweise kann einer ersten Sicherheitsstufe nur die erste holographische Information und einer zweiten Sicherheitsstufe beide oder nur die zweite holographische Information zugänglich sein.

Dadurch ist es möglich verschiedene Informationen zeitlich getrennt einzuschreiben, das bedeutet, dass in einen Datenträger nach einem ersten Beschreiben noch später weiter Informationen, also Speicherinhalte hinzugefügt werden können. Dadurch ist es möglich die unterschiedlichen Informationen mit verschiedenen Beugungsstrukturen einzubelichten und damit diese in der Rekonstruktion räumlich oder in der Auflösung zu trennen.

Ein Beispiel für eine Punkteverteilung für diese Anwendung besteht darin, dass ein 2D-Barcode als makroskopische Überstruktur gewählt wird, wobei die dunklen Bereiche mit einem ersten computergenerierten Hologramm und die hellen Bereich mit einem zweiten computergenerierten Hologramm versehen sind. Dieses Beispiel eines solchen computergenerierten Hologramms wird weiter unten näher erläutert.

Das optische System kann eine zweite Strahlungsquelle zum Erzeugen eines zweiten Lesestrahls aus elektromagnetischer Strahlung, einen im Strahlengang des zweiten Lesestrahls angeordneten Strahlteiler und einen lichtempfindlichen Detektor aufweisen. Der Strahlteiler ist für ein Ablenken der reflektierten Strahlung auf den lichtempfindlichen Detektor vorgesehen. Diese Ausbildung ist dafür geeignet, dass das Speichermedium am Lesestrahl vorbei geführt wird.

Des Weiteren kann eine Scanvorrichtung für ein Scannen des zweiten Lesestrahls über die Punkteverteilung der vom Hologramm eingenommenen Fläche vorgesehen sein. Damit können dann auch feststehende Speichermedien gescannt werden.

Eine typische Punkteverteilung, die mit dieser Ausgestaltung gelesen werden kann, weist mindestens einen Bereich mit einem computergenerierten Hologramm und als makroskopische Überstruktur einen 1D-Barcode auf. Diese Vorrichtung kann auch als Kombination einer Vorrichtung zum Auslesen eines computergenerierten Hologramms mit einem 1D-Barcode-Scanner bezeichnet werden.

Die Erfindung wird im Folgenden anhand von Ausführungsbeispielen näher erläutert, wozu auf die beigefügte Zeichnung Bezug genommen wird. In der Zeichnung zeigen
- Fig. 1a-g: eine Mehrzahl von Abbildungen zur Erläuterung des erfindungsgemäßen Verfahrens zum Berechnen eines computergenerierten Hologramms für eine Kombination eines ein Logo und Text aufweisenden Hologramms mit einer eine Photographie enthaltenden makroskopischen Überstruktur,
- Fig. 2a,b: eine mikroskopische Aufnahme einer Punkteverteilung bestehend aus einer Verknüpfung eines computergenerierten Hologramms mit einer makroskopischen Überstruktur in Form einer Photographie sowie eine Reproduktion des Hologramms,
- Fig. 3a-i: eine Mehrzahl von Abbildungen zur Erläuterung des erfindungsgemäßen Verfahrens zum Berechnen eines computergenerierten Hologramms für eine Kombination von zwei Logo und Text aufweisenden Hologrammen mit einer einen 2D-Barcode enthaltenden makroskopischen Überstruktur,
- Fig. 4a,b: eine mikroskopische Aufnahme einer Punkteverteilung bestehend aus einer Verknüpfung eines computergenerierten Hologramms mit einer makroskopischen Überstruktur in Form eines 2D-Barcodes sowie eine Reproduktion des Hologramms,
- Fig. 5a-c: ein Ausführungsbeispiel einer Punkteverteilung sowie eine mikroskopische Aufnahme der Punkteverteilung bestehend aus einer Verknüpfung eines computergenerierten Hologramms mit einer makroskopischen Überstruktur in Form eines computergenerierten Dotmatrix-Hologramms einer Mikroschrift sowie eine Reproduktion des Hologramms,
- Fig. 6a-h: ein erstes Ausführungsbeispiel für eine iterative Optimierung eines Dotmatrix-Hologramms,
- Fig. 7a-h: ein zweites Ausführungsbeispiel für eine iterative Optimierung eines Dotmatrix-Hologramms,
- Fig. 8a-z: ein drittes Ausführungsbeispiel für eine iterative Optimierung eines Dotmatrix-Hologramms.
- Fig. 9: ein erstes Ausführungsbeispiel einer nicht von der Erfindung umfassten Vorrichtung zum Auslesen eines in einem Speichermedium gespeicherten Hologramms,
- Fig. 10: ein zweites Ausführungsbeispiel einer nicht von der Erfindung umfassten Vorrichtung zum Auslesen eines in einem Speichermedium gespeicherten Hologramms,
- Fig. 11: ein drittes Ausführungsbeispiel einer nicht von der Erfindung umfassten Vorrichtung zum Auslesen eines in einem Speichermedium gespeicherten Hologramms und
- Fig. 12: ein viertes Ausführungsbeispiel einer nicht von der Erfindung umfassten Vorrichtung zum Auslesen eines in einem Speichermedium gespeicherten Hologramms.

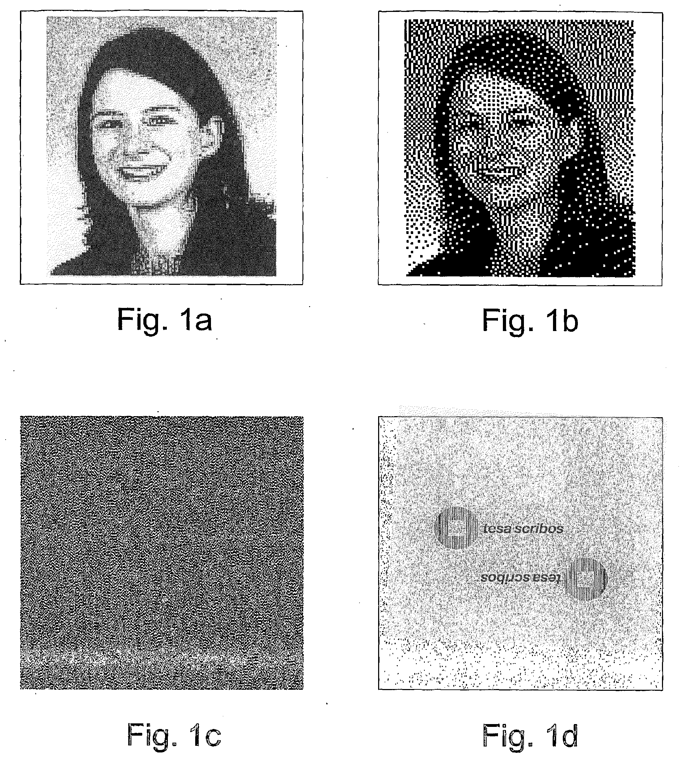

In den Fig. 1a bis 1g ist eine Reihe von Abbildungen dargestellt, mit deren Hilfe eine erste Ausgestaltung des Verfahrens zum Berechnen eines Hologramms erläutert wird.

Fig. 1a zeigt eine normale schwarz/weiße Photographie, die aus vielen Bildpunkten zusammengesetzt ist. Aus diesem Bild wird nachfolgend die Punkteverteilung der makroskopischen Überstruktur berechnet.

Fig. 1b zeigt eine gerasterte Darstellung des Bildinhaltes der Photographie, wobei beispielsweise ein Dithering nach Floyd-Steinberg angewendet werden kann. Aus dem ursprünglichen Graustufenbild ist eine Rasterung aus schwarzen und weißen Punkten entstanden, die der Punkteverteilung der makroskopischen Überstruktur entspricht. Diese Überstruktur lässt bei einer Verkleinerung ein Bild erkennen, das dem ursprünglichen Bild gemäß Fig. 1a entspricht.

Fig. 1c zeigt die Punkteverteilung eines computergenerierten Hologramms, in dem ein Logo und Text verarbeitet worden sind. Fig. 1d zeigt eine Rekonstruktion des Hologramms gemäß Fig. 1c mit scharfen Kontrasten und geringem Hintergrundrauschen.

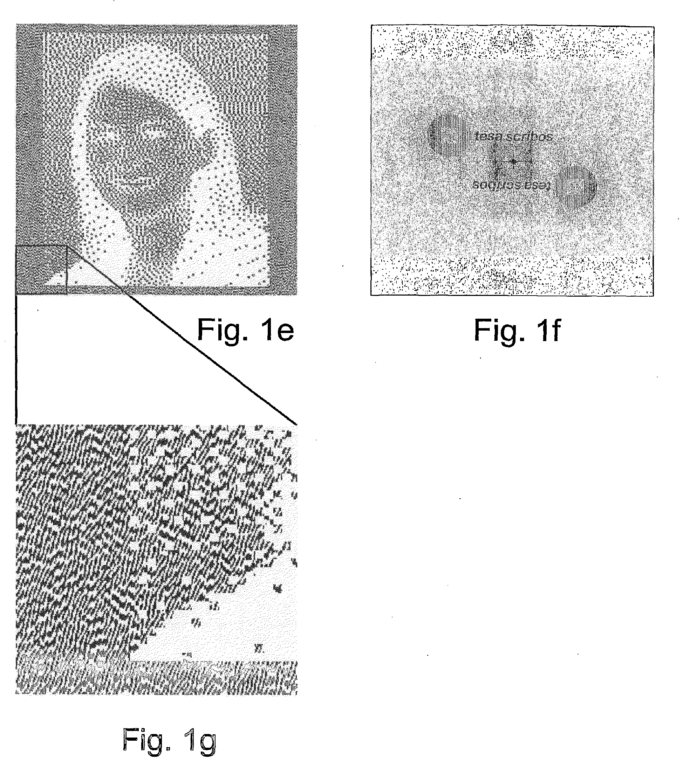

Fig. 1e zeigt das Ergebnis einer NAND-Verknüpfung der Punkteverteilung des computergenerierten Hologramms gemäß Fig. 1c mit der Punkteverteilung der makroskopischen Überstruktur gemäß Fig. 1b. Bei der NAND-Verknüpfung werden die in Fig. 1b dargestellten schwarzen Punkte in der Punkteverteilung nach Fig. 1e ausgelassen, auch wenn die Punkteverteilung des computergenerierten Hologramms an dieser Stelle schwarze Punkte vorgesehen hat.

Im Ergebnis wird eine Punkteverteilung erhalten, die zum einen eine negative Darstellung der makroskopische Überstruktur und zum anderen die für ein computergeneriertes Hologramm typische unregelmäßige Struktur zeigt. Diese Struktur wird auch in Fig. 1g deutlich, in der ein Ausschnitt aus Fig. 1e vergrößert dargestellt ist.

Daraus wird auch deutlich, warum die Rasterung des Graustufenbildes für die Punkteverteilung der makroskopischen Überstruktur eher grob gewählt wird. Denn die eine Beugungsstruktur aufweisenden Abschnitte des computergenerierten Hologramms dürfen nicht zu stark aufgeteilt, sozusagen atomisiert werden, damit durchgängige Abschnitte mit einem ausreichend großen Beugungsgitter in der in ein Speichermedium zu schreibenden Punkteverteilung verbleiben. Denn bei einer starken Aufteilung des computergenerierten Hologramms in zu kleine Teilbereiche wird die Wirkung der Beugungsstrukturen abgeschwächt.

Fig. 1f zeigt schließlich die Rekonstruktion des in der Punkteverteilung nach Fig. 1e enthaltenen Hologramms. Im Vergleich zu Fig. 1d ist ein schwächerer Kontrast und ein stärkeres Hintergrundrauschen zu erkennen, der durch den Verlust der Informationen durch die Verknüpfung mit der makroskopischen Überstruktur zu erklären ist. Dennoch reicht die Qualität der Rekonstruktion ohne weiteres für eine Auswertung aus.

Wie in der Fig. 1e und vergrößert in Fig. 1g dargestellt ist, sind die Punkte der Punkteverteilung in einer binären Verteilung eingeschrieben worden. Dadurch sind in den Bereichen die Punkte der Abbildung weggelassen worden und es entstehen weiße Flächen, die keine holographische Information enthalten.

Bei einer weiteren Ausgestaltung werden die Punkte der Punkteverteilung in einer Grauwertverteilung einbelichtet. Dadurch ist es möglich, die in Fig. 1e und 1g weißen Flächen mit einem grauwertigen holographischen Muster zu belegen. Dadurch ist einerseits gewährleistet, dass das reproduzierte Hologramm eine bessere Qualität aufweist, da die Anzahl der die holographischen Informationen tragenden Punkte erhöht ist und da andererseits die Abbildung - wenn auch ein wenig abgeschwächt - weiterhin erkennbar ist.

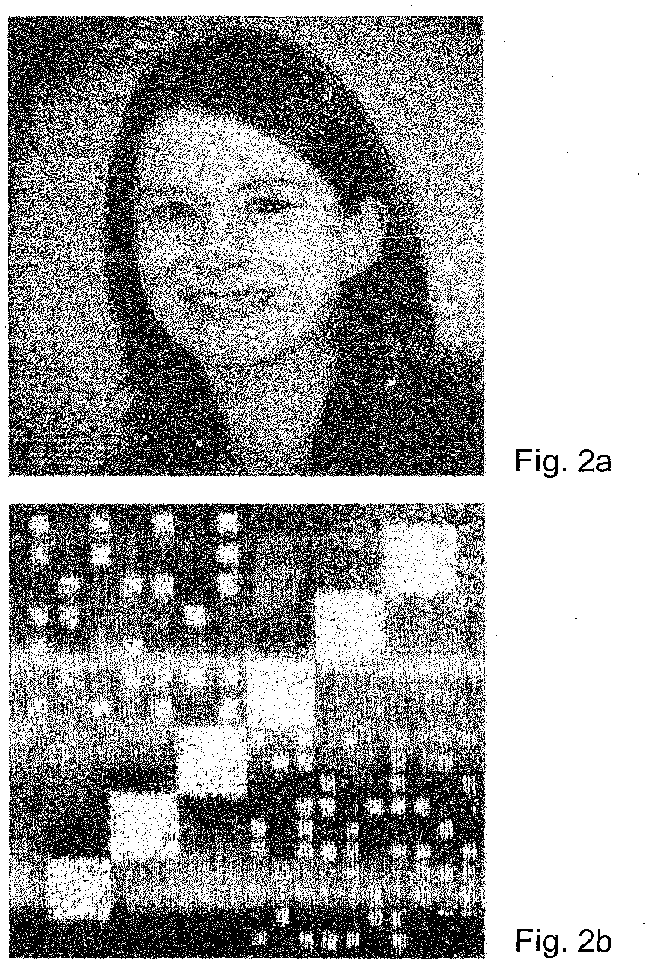

Fig. 2 zeigt ein weiteres Ausführungsbeispiel einer Verknüpfung eines computergenerierten Hologramms mit einer makroskopischen Überstruktur in Form eines Photos. Es handelt sich dabei um die gleiche Photographie wie in Fig. 1a.

Fig. 2a zeigt eine mikroskopische Aufnahme dieser Punkteverteilung, die durch eine AND-Verknüpfung aus einem computergenerierten Hologramm und einer makroskopischen Überstruktur in Form eines Photos berechnet und erzeugt worden ist. Es ist eine durchaus kontrastreiche Abbildung des Photos zu erkennen. Im Gegensatz zur Darstellung in Fig. 1e ist die Photographie als Positiv dargestellt. Im Vergleich zu Fig. 1b ist die Rasterung erheblich feiner, so dass mehr Bildinformation der makroskopischen Überstruktur erhalten geblieben ist.

Dagegen ist die Struktur des computergenerierten Hologramms nur in den äußeren Bereichen der Abbildung an der unregelmäßigen Beugungsgitterstruktur zu erkennen. Dennoch ist aufgrund der UND-Verknüpfung der gesamte Bereich der Punkteverteilung des computergenerierten Hologramms verteilt angeordnet. Dieses erkennt man daran, dass die in Fig. 2b dargestellte Rekonstruktion des Hologramms einen ausreichenden Kontrast bietet, so dass die enthaltenen Datenbitarrays leicht ausgewertet werden können. Der Kontrast und die Ortsauflösung sind dabei geringer als bei der in Fig. 1f gezeigten Rekonstruktion. Die geringe Auflösung ist durch die feinere Rasterung der makroskopischen Überstruktur bedingt, jedoch ist die Rekonstruktion für den in Fig. 2b dargestellten holographischen Informationsgehalt ausreichend.

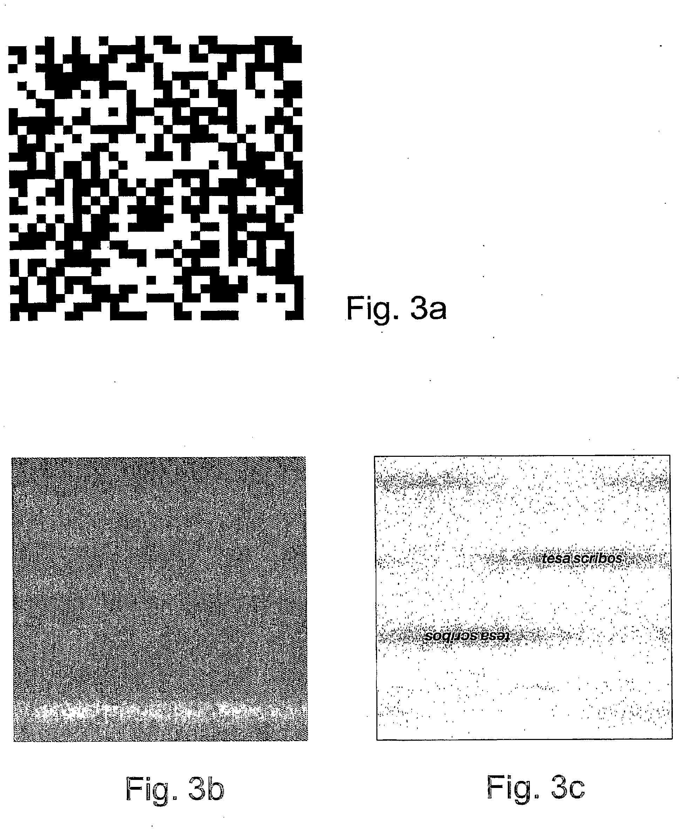

In den Fig. 3a bis 3i ist eine ähnliche Abfolge von Abbildungen wie in Fig. 1 dargestellt. Bei diesem Ausführungsbeispiel wird eine zweite Ausgestaltung des Verfahrens zum Berechnen eines Hologramms erläutert.

Fig. 3a zeigt eine Punkteverteilung eines 2D-Barcodes, die aus vielen Bildpunkten zusammengesetzt ist. Jedes Quadrat des Barcodes umfasst eine Vielzahl von Punkten, beispielsweise wird jedes Quadrat aus 25x25 Punkten zusammengesetzt.

Fig. 3b zeigt die Punkteverteilung eines ersten computergenerierten Hologramms, in dem ein Text verarbeitet worden ist. Die Punkteverteilung des ersten computergenerierten Hologramms weist eine erste bevorzugte Winkelausrichtung auf. Fig. 3c zeigt eine Rekonstruktion des Hologramms gemäß Fig. 3b mit scharfen Kontrasten und geringem Hintergrundrauschen.

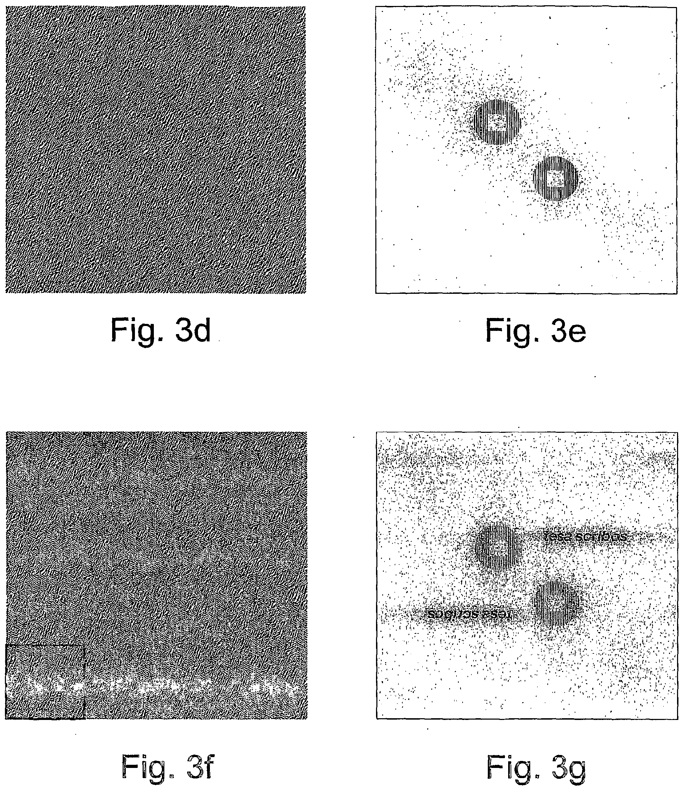

Fig. 3d zeigt die Punkteverteilung eines zweiten computergenerierten Hologramms, in dem ein Logo verarbeitet worden sind. Die Punkteverteilung des zweiten computergenerierten Hologramms weist eine zweite bevorzugte Winkelausrichtung auf. Fig. 3e zeigt eine Rekonstruktion des Hologramms gemäß Fig. 3d ebenfalls mit scharfen Kontrasten und geringem Hintergrundrauschen.

Fig. 3f zeigt das Ergebnis einer Verknüpfung der Punkteverteilungen der beiden computergenerierten Hologramme gemäß Fig. 3b und 3d mit der Punkteverteilung der makroskopischen Überstruktur gemäß Fig. 3a. Hierbei wird die Punkteverteilung des erstes computergenerierten Hologramms an den schwarzen Quadraten des 2D-Hologramms der makroskopischen Überstruktur durch die entsprechende Punkteverteilung des zweiten computergenerierten Hologramms ersetzt. Somit weist die makroskopische Überstruktur in der in Fig. 3f dargestellten Punkteverteilung eine zweite bevorzugte Winkelausrichtung gegenüber der ersten bevorzugten Winkelausrichtung des ersten computergenerierten Hologramms auf.

Mit anderen Worten wird die Punkteverteilung des ersten computergenerierten Hologramms an den von der Punkteverteilung der makroskopischen Überstruktur ausgefüllten Bereichen ersetzt. Zudem weist die Punkteverteilung der makroskopischen Überstruktur selbst ein computergeneriertes Hologramm auf, vorliegend das zweite computergenerierte Hologramm.

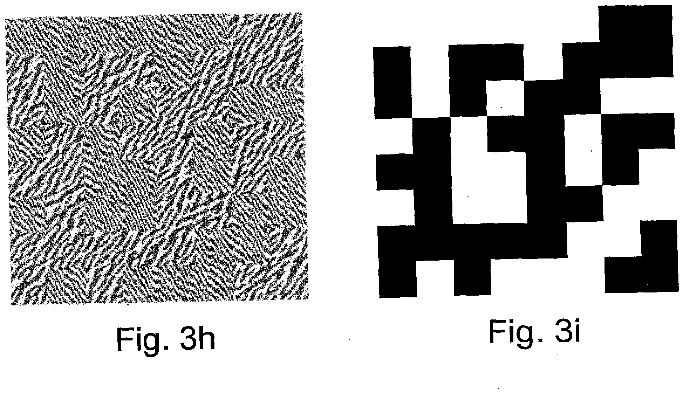

Fig. 3h zeigt den in Fig. 3f umrandeten Bereich der Punkteverteilung in einer vergrößerten Darstellung, wobei zum direkten Vergleich der entsprechende Ausschnitt aus dem 2D-Barcode gemäß Fig. 3a daneben als Fig. 3i dargestellt ist. Ein Vergleich ergibt, dass die in Fig. 3i schwarz dargestellten Quadrate des Barcodes in der Punkteverteilung des zweiten computergenerierten Hologramms nach Fig. 3d aufweisen, während die in Fig. 3i weißen Quadrate die Punkteverteilung des ersten computergenerierten Hologramms aufweisen.

Somit sind insgesamt drei verschiedene, voneinander getrennte Informationen in der Punkteverteilung enthalten. Zum einen die makroskopische Überstruktur, die aus einer Gesamtansicht der Fig. 3f sichtbar wird. Insbesondere bei einer schrägen Beleuchtung können die Bereiche mit in unterschiedlichen Winkeln verlaufenden Linien deutlich voneinander getrennt werden. Zum anderen befinden sich in der Punkteverteilung zwei verschiedene holographische Informationen, wie sich aus der in Fig. 3g dargestellten Rekonstruktion ergibt. Denn sowohl die Rekonstruktion des im ersten Hologramm eingebetteten Textes als auch die Rekonstruktion des im zweiten Hologramm eingebetteten Logos sind in Fig. 3g versetzt zueinander zu erkennen.

Im Vergleich zu den Fig. 3c und 3e ist ein schwächerer Kontrast und ein stärkeres Hintergrundrauschen zu erkennen, der durch den Verlust der Informationen durch die Verknüpfung mit der makroskopischen Überstruktur bzw. mit der Aufteilung in zwei verschiedene computergenerierte Hologramme zu erklären ist. Dennoch reicht die Qualität der Rekonstruktion ohne weiteres für eine Auswertung aus.

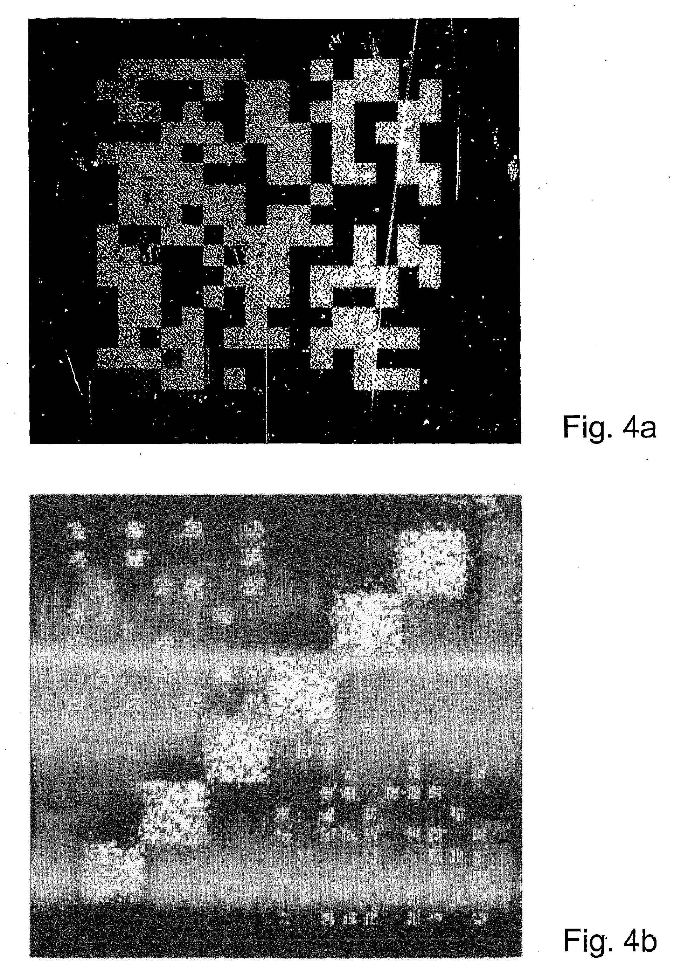

Fig. 4 zeigt ein Ausführungsbeispiel einer Verknüpfung eines computergenerierten Hologramms mit einer makroskopischen Überstruktur in Form eines 2D-Barcodes.

Fig. 4a zeigt eine mikroskopische Aufnahme dieser Punkteverteilung, die durch eine UND-Verknüpfung aus einem computergenerierten Hologramm und einer makroskopischen Überstruktur in Form eines 2D-Barcodes berechnet worden ist. Der 2D-Barcode ist hauptsächlich anhand der in der Darstellung dunklen, schwarzen Bereiche deutlich erkennbar, während die helleren Bereiche nicht eine einheitliche Farbgebung aufweisen, sondern die Struktur des computergenerierten Hologramms aufweisen.

Durch die Aufnahme des Barcodes können die darin enthaltenen Informationen direkt durch eine Maschine ausgewertet werden. Dieses entspricht der normalen Anwendung eines Barcodes.

Darüber hinaus kann die in der Punkteverteilung in den helleren Bereichen angeordnete holographische Information mittels eines Lesestrahls, vorzugsweise eines Laserstrahls ausgelesen werden. Die entsprechende Information zeigt Fig. 4b.

Die in Fig. 4a dargestellte Punkteverteilung weist somit zwei verschiedene Informationsgehalte auf. Zum einen den in Fig. 4a dargestellten 2D-Barcode als direkt sichtbares Muster und die holographische Information, die erst durch ein Auslesen, beispielsweise mit Hilfe eines Laserstrahles, sichtbar gemacht werden kann. Das in Fig. 4b dargestellte reproduzierte computergenerierte Hologramm enthält in der linken oberen Ecke und in der rechten unteren Ecke jeweils ein digitales Datenfeld.

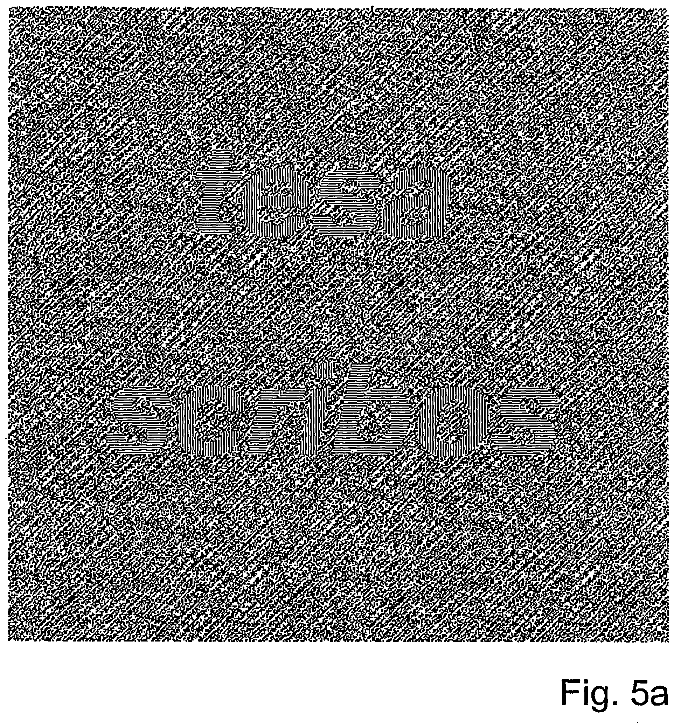

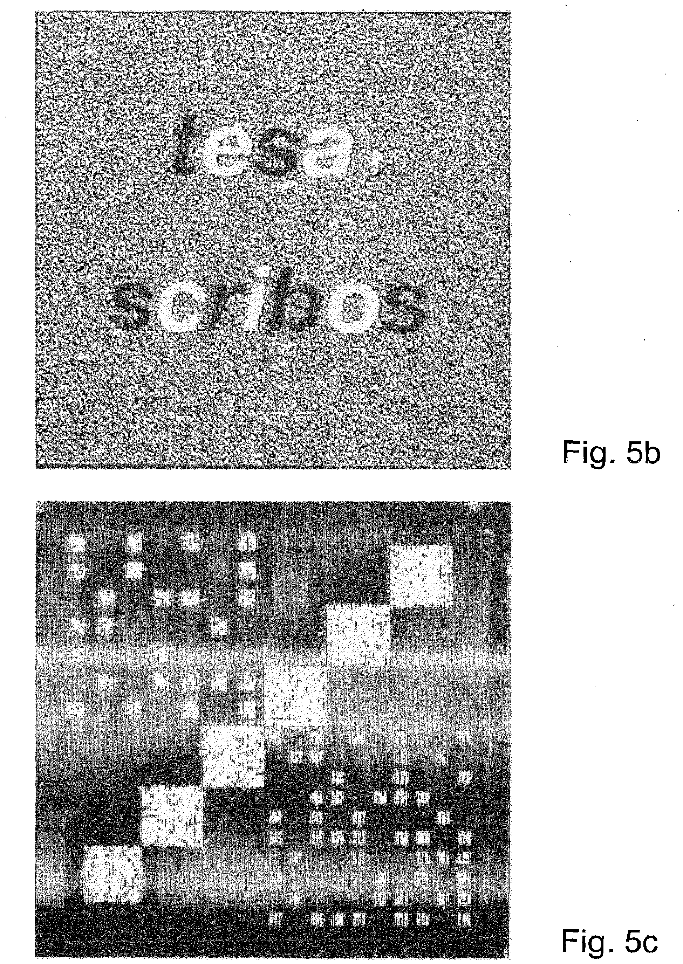

Fig. 5 zeigt ebenfalls eine Kombination verschiedener Beugungsstrukturen innerhalb einer Punkteverteilung.

Fig. 5a zeigt die Punkteverteilung, in der ein Hintergrund mit einer schräg von unten links nach oben rechts verlaufenden unregelmäßigen Beugungsstruktur vorgesehen ist. Des Weiteren ist eine Buchstabenfolge in der Punkteverteilung enthalten, wobei die Flächen der Buchstaben abwechselnd ein regelmäßiges Beugungsmuster mit senkrecht oder waagerecht verlaufenden Beugungslinien aufweisen.

Die einzelnen Buchstaben können einerseits als Ganzes als Dots einer computergenerierten Dotmatrix verstanden werden. Andererseits kann auch angenommen werden, dass jeder Buchstabe aus einer Vielzahl kleinerer Dots zusammengesetzt ist, die jeweils direkt aneinander grenzen und ineinander übergehende Beugungsgitter aufweisen. In jedem Fall ergibt sich aber ein computergeneriertes Dotmatrix-Hologramm, das vorliegend das Abbild einer Mikroschrift trägt.

In Fig. 5b ist eine Aufnahme der Punkteverteilung dargestellt. Durch die unterschiedlichen Beugungswirkungen der verschiedenen Flächen weist der Hintergrund eine unregelmäßig graue Farbe auf, während die Buchstaben abwechselnd weiß und schwarz erscheinen. Letzteres ist dadurch bedingt, dass das auftreffende Licht einerseits bevorzugt in Beobachtungsrichtung und andererseits nicht oder nur in sehr geringem Maße in Beobachtungsrichtung gebeugt wird.

Daher ergibt sich der typische Effekt eines Dotmatrix-Hologramms, das verschiedene Bereiche mit unterschiedlicher Beugungswirkung in der direkten Beobachtung in unterschiedlichen Farben und/oder Helligkeiten erscheinen. Die Mikroschrift ist daher deutlich zu erkennen.

Darüber hinaus ist auch bei diesem Ausführungsbeispiel ein weiterer Informationsgehalt in der Punkteverteilung enthalten. Denn die schräg von unten links nach oben rechts verlaufenden unregelmäßige Beugungsstruktur ist als computergeneriertes Hologramm ausgebildet. Daher kann durch ein Auslesen mit Hilfe beispielsweise eines Laserstrahls die im Hologramm enthaltene Information erhalten werden, die in Fig. 5c dargestellt ist. Die sich ergebenden Datenbitmuster entsprechen den in den Fig. 2b und 4b dargestellten Mustern.

Im Folgenden wird eine Optimierung der Punkteverteilungen von Dotmatrix-Hologrammen anhand von drei Ausführungsbeispielen näher erläutert.

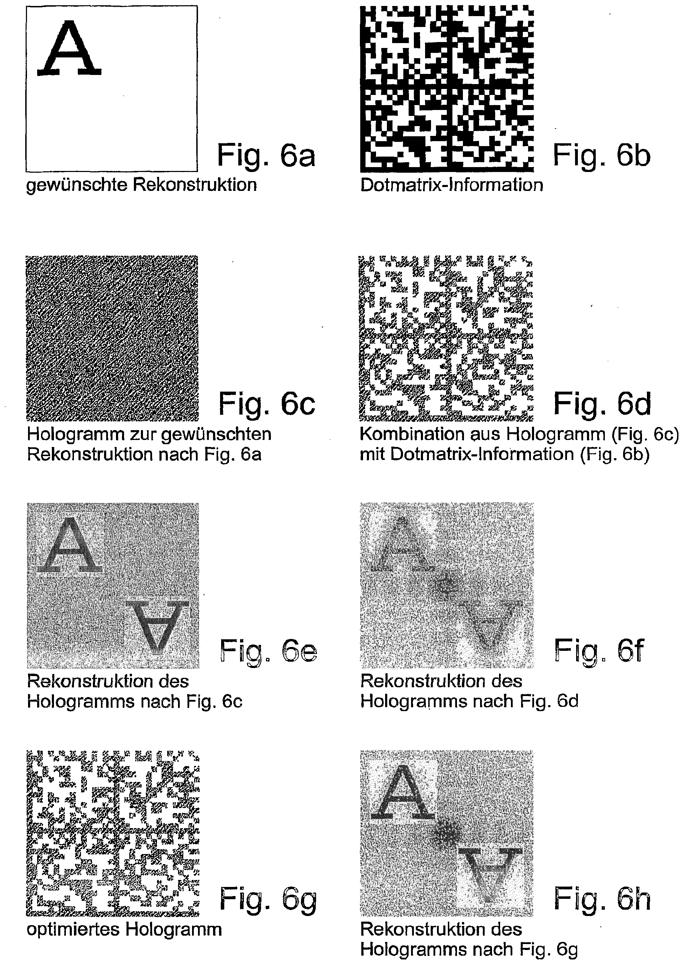

Zunächst wird auf die Fig. 6a bis 6h Bezug genommen. Die ersten Schritte gemäß Fig. 6a bis 6f entsprechen dabei den zuvor erläuterten Verfahrensschritten, um ein computergeneriertes Dotmatrix-Hologramm in Kombination mit einem computergenierten Hologramm zu erzeugen.

Zunächst wird die gewünschte Rekonstruktion definiert, Fig. 6a. Ebenso wird die Dotmatrix-Information festgelegt, Fig. 6b. Die zu berechnende Punkteverteilung zu der gewünschten Rekonstruktion ist in Fig. 6c dargestellt. Die Kombination aus der Dotmatrix-Information und der Punkteverteilung ist weiterhin in Fig. 6d dargestellt.

Fig. 6e zeigt die Rekonstruktion des Hologramms entsprechend der Punkteverteilung gemäß Fig. 6c. Des weiteren zeigt Fig. 6f die Rekonstruktion der Punkteverteilung gemäß Fig. 6d, wobei der bereits oben aufgezeigte Informationsverlust im Vergleich zwischen den Fig. 6e und 6f deutlich wird.

Bei der nachfolgenden Optimierung der Punkteverteilung wird die spätere Form des Hologramms entsprechend der Dotmatrix-Information in die Berechnung mit einbezogen. Dabei wird ein iterativer Fourier-Transformations Algorithmus verwendet, hier vorzugsweise der Gradual and Random Binarization Algorithmus. Iterative Fourier-Transformations Algorithmen gehen zwischen der Ebene des Hologramms und der Ebene der Rekonstruktion hin und her, d.h. die jeweiligen Intensitätsverteilungen werden durch vorwärts und rückwärts gerichtete Strahlenverläufe berechnet. Dabei werden in beiden Ebenen die folgenden unterschiedlichen Operationen angewendet. Zur Berechnung von quantisierten Hologrammen wird in der Ebene des Hologramms eine Quantisierungsoperation angewendet. In der Ebene der Rekonstruktion wird in einem Signalfenster die sich ergebende Rekonstruktion durch die gewünschte Rekonstruktion ersetzt.

Während der Optimierung für das in Fig. 6g dargestellte Dotmatrix-Hologramm wird die Form des Hologramms in den Algorithmius mit einbezogen. Dieses wird in der Ebene des Hologramms neben der Quantisierungsoperation als eine weitere Operation durchgeführt.

Fig. 6g zeigt das Ergebnis der Optimierung in Form der optimierten Punkteverteilung, während Fig. 6h die Rekonstruktion der optimierten Punkteverteilung zeigt. Im Vergleich zwischen Fig. 6f und 6h wird die verbesserte Qualität der Rekonstruktion deutlich. Des weiteren ist in der Punkteverteilung die Dotmatrix-Information in gleicher Weise wie in Fig. 6d vor der Optimierung sichtbar.

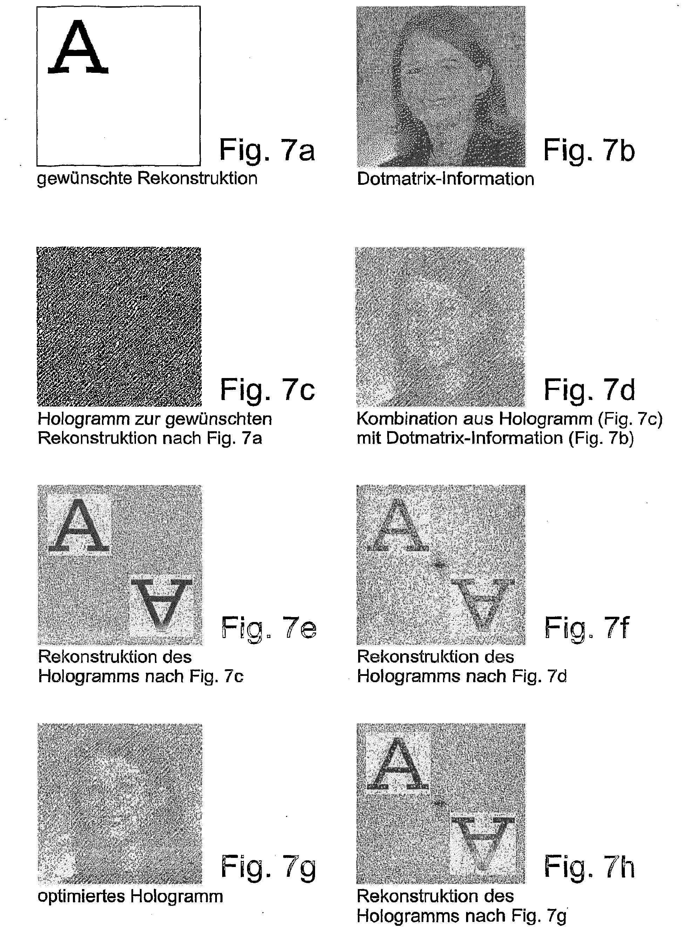

Fig. 7 zeigt ein weiteres Beispiel der zuvor erläuterten Optimierung anhand einer Abbildung einer Photographie anstelle des 2D-Barcodes als Dotmatrix-Information. Die Abfolge der Fig. 7a bis 7h entspricht der Abfolge der Fig. 6a bis 6h, so dass auf die zuvor angegebene Beschreibung Bezug genommen werden kann.

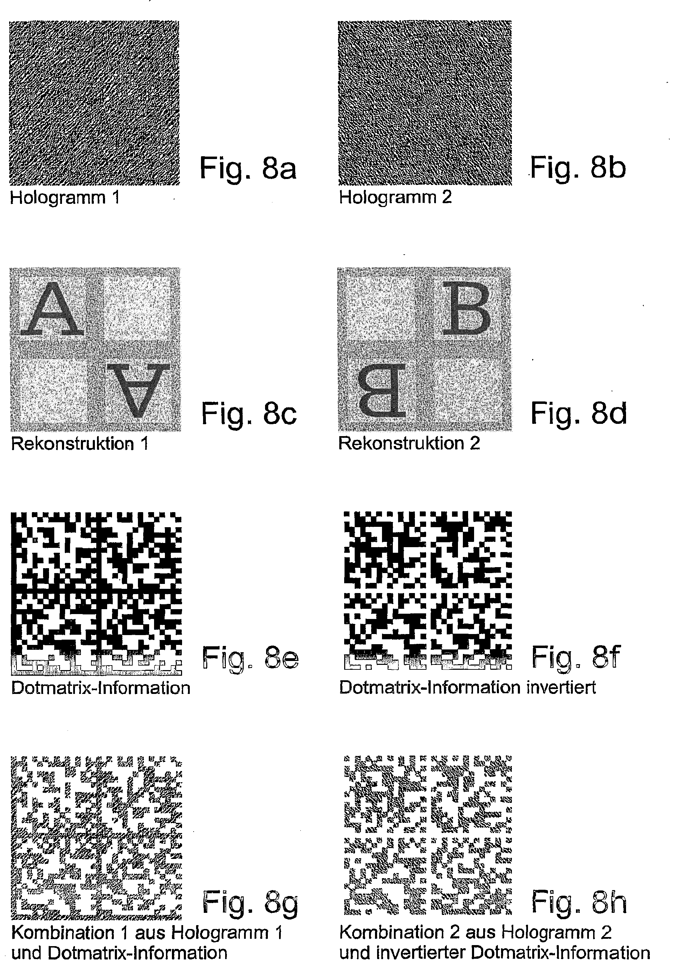

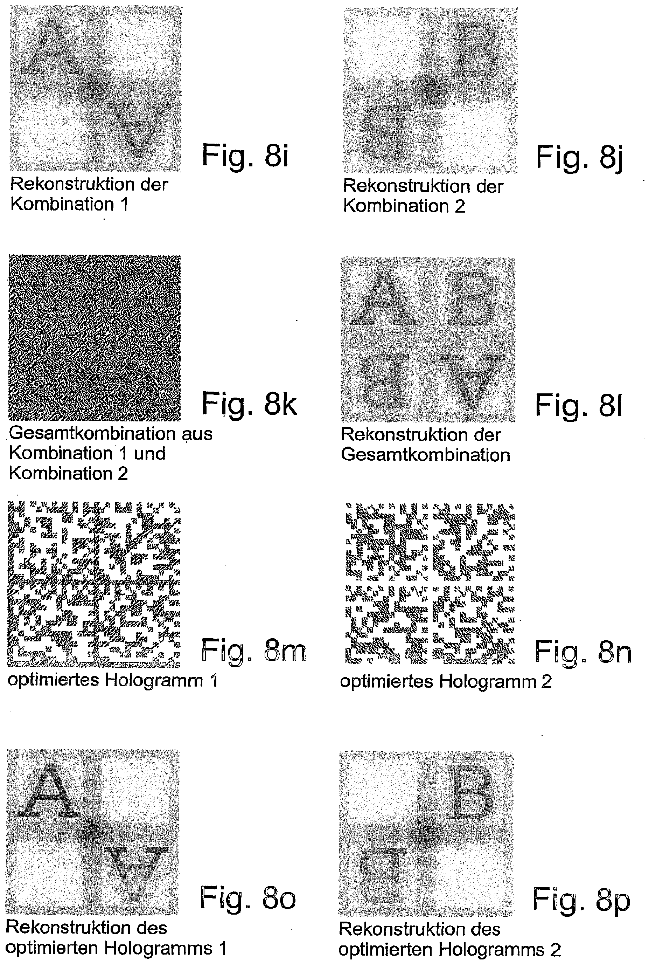

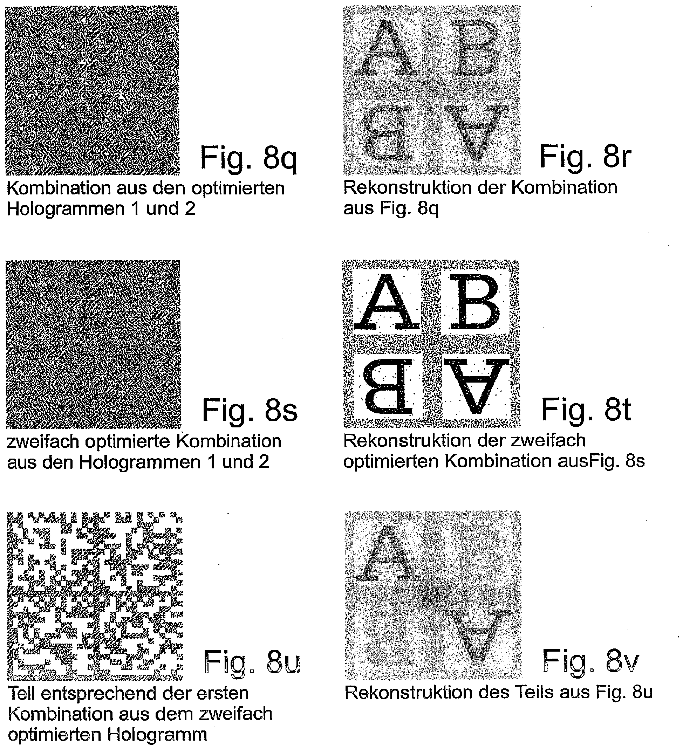

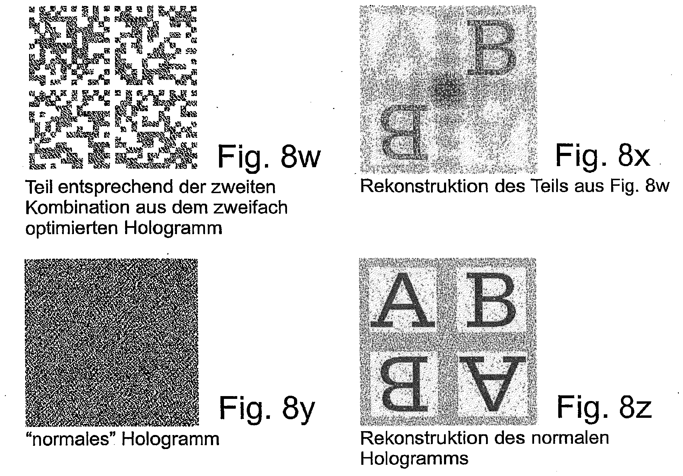

Fig. 8 zeigt ein drittes Ausführungsbeispiel einer Optimierung der Punkteverteilung, wobei nachfolgend zur zuvor beschriebenen ersten Optimierung ein zweiter Optimierungsschritt angewendet wird, der im Spezialfall des Datamatrix-Hologramms, also einer Kombination eines 2D-Barcode Dotmatrix-Hologramm mit zwei verschiedenen computergenerierten Hologramme vorgenommen werden kann.

Das Datamatrix-Hologramm beruht darauf, dass die Interferenzstreifen eines Hologramms je nach Rekonstruktion eine Vorzugsrichtung besitzen. Dieses ist in den Fig. 8a und 8b für zwei verschiedene Hologramme 1 und 2 dargestellt. Die entsprechenden Rekonstruktionen 1 und 2 zeigen Fig. 8c und 8d.

Für das Datamatrix-Hologramm werden zwei Hologramme mit unterschiedlichen Vorzugsrichtungen kombiniert, wobei die . Dotmatrix-Information eines 2D-Barcodes gemäß Fig. 8e und dessen Invertierung gemäß Fig. 8f verwendet werden. Daraus ergeben sich die Kombinationen 1 und 2 mit den Hologrammen 1 und 2 gemäß Fig. 8g und 8h. Dort, wo in der Kombination 1 eine die Information des Hologramms 1 wiedergebende Punkteverteilung angeordnet ist, weist die Kombination 2 leere Flächen auf und umgekehrt.

Die Fig. 8i und 8j zeigen die Rekonstruktionen zu beiden Kombinationen 1 und 2, wobei ein Informationsverlust gegenüber den Rekonstruktionen 1 und 2 gemäß Fig. 8c und 8d zu erkennen ist.

Fig. 8k zeigt die Gesamtkombination aus beiden Kombinationen 1 und 2, die wie bereits erwähnt komplementär zueinander sind. Fig. 8l zeigt dann die Rekonstruktion der Gesamtkombination, wobei die Qualität der Rekonstruktion im wesentlichen der Qualität der Rekonstruktionen der einzelnen Kombinationen 1 und 2 gemäß den Fig. 8i und 8j entspricht.

Im nächsten Schritt wird die oben bereits beschriebene erste Optimierung für jede der beiden Kombinationen 1 und 2 durchgeführt. Die einfache Optimierung beruht auf dem Prinzip, dass die spätere Form des Hologramms in die Berechnung mit einbezogen wird. Daraus ergeben sich die optimierten Hologramme 1 und 2 gemäß Fig. 8m und 8n, deren jeweilige Rekonstruktion in den Fig. 8o und 8p dargestellt sind. Im Vergleich zu den Rekonstruktionen der nicht optimierten Kombinationen 1 und 2 gemäß Fig. 8i und 8j zeigt sich bereits eine Qualitätsverbesserung in Form eines besseren Kontrastes und einer besseren Auflösung. Das gleiche Ergebnis ergibt sich für die Kombination aus den beiden optimierten Hologrammen 1 und 2, die in Fig. 8q dargestellt ist, deren Rekonstruktion Fig. 8r zeigt.

In der zweiten Optimierung wird von der ersten Optimierung ausgehend das gesamte Hologramm gemäß Fig. 8q noch einmal berechnet. Dabei wird von der Rekonstruktion der Kombination ausgegangen und das Hologramm als Ganzes mit Hilfe der zuvor beschriebenen iterativen Fouriertransformation berechnet. Die daraus entstehende gesamte zweifach optimierte Kombination der Hologramme 1 und 2 ist in Fig. 8s dargestellt. Die zugehörige Rekonstruktion der zweifach optimierten Punkteverteilung zeigt Fig. 8t, wobei im Vergleich mit der Rekonstruktion der einfach optimierten Punkteverteilung gemäß Fig. 8r nochmals eine deutliche Steigerung der Qualität erzielt wird.

Fig. 8u zeigt das aus der zweifach optimierten Punkteverteilung extrahierte Teilhologramm, das dem einfach optimierten Hologramm1 gemäßFig. 8m entspricht. Dessen Rekonstruktion zeigt Fig. 8v. Ebenso zeigt Fig. 8w das aus der zweifach optimierten Punkteverteilung extrahierte Teilhologramm, das dem einfach optimierten Hologramm 2 gemäß Fig. 8n entspricht. Dessen Rekonstruktion zeigt Fig. 8x. In beiden Rekonstruktionen gemäß Fig. 8v und 8x erkennt man als schwaches Abbild die Information des jeweils anderen Hologramms . Beispielsweise ist in der rechten oberen Ecke und der linken unteren Ecke der Rekonstruktion gemäß Fig. 8v der Buchstabe B zu erkennen, der in der Rekonstruktion des einfach optimierten Teilhologramms gemäß Fig. 8o nicht enthalten ist.

Daraus erkennt man, wie die zweite Optimierung entsteht. Es kommt zu einer Vermischung der Informationen aus beiden Hologrammen, die jedoch zu einer deutlichen Qualitätsverbesserung führt. Anscheinend korrigiert ein Teilhologramm den Restfehler, der durch das andere Teilhologramm entsteht. Die Teilhologramme korrigieren sich also gegenseitig.

Die Vorzugsrichtung der Interferenzstreifen bleibt jedoch bestehen, die Teilhologramme sind also trotz gemeinsamer Optimierung weiterhin für ein computergeneriertes Dotmatrix-Hologramm, insbesondere für ein Datamatrix-Hologramm einsetzbar.

Die zweite Optimierung liefert qualitativ sehr hochwertige Ergebnisse. Die Qualität des resultierenden Hologramms ist vergleichbar mit einem normal optimiert berechneten Hologramm ohne Datamatrix-Information. Dieses zeigen die Fig. 8y und 8z für eine solche Berechnung und zugehörige Rekonstruktion. Vergleicht man die Rekonstruktionen, die in den Fig. 8t für die zweifach optimierte Punkteverteilung eines Dotmatrix-Hologramms und in Fig. 8z für eine Punkteverteilung eines "normalen" computergenerierten Hologramms dargestellt sind, so sind nur noch geringe Qualitätsunterschiede fest zu stellen. Trotz der nahezu gleichen Qualitäten der Rekonstruktionen enthält die Punkteverteilung gemäß Fig. 8s jedoch zusätzlich noch die Dotmatrix-Information des zugrunde liegenden 2D-Barcodes.

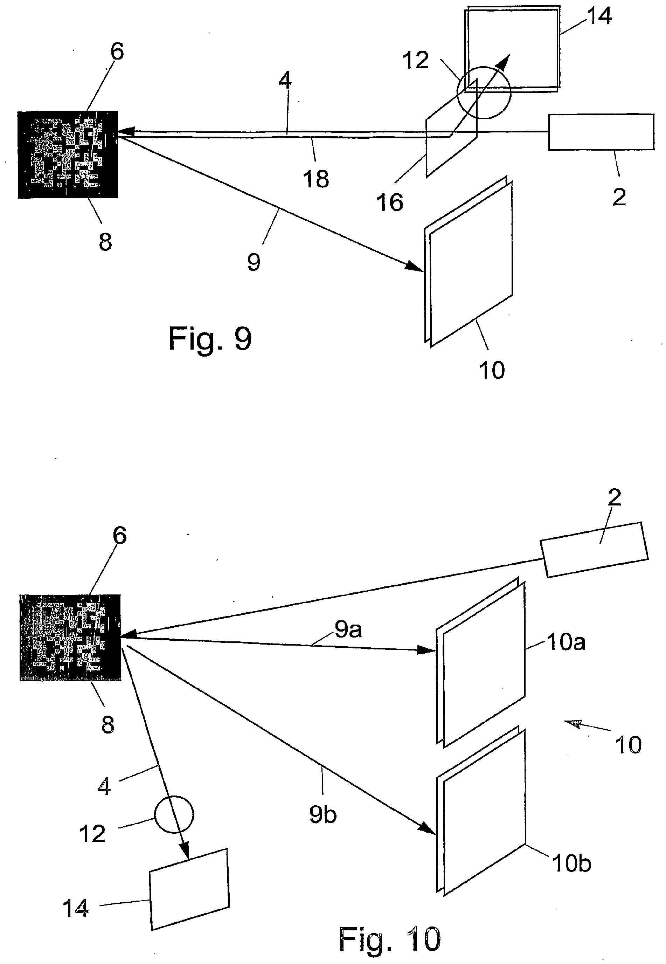

In Fig. 9 ist ein erstes Ausführungsbeispiel einer Vorrichtung zum Auslesen eines in einem Speichermedium gespeicherten Hologramms dargestellt. Die Vorrichtung weist eine Strahlungsquelle 2 zum Erzeugen eines Lesestrahls 4 aus elektromagnetischer Strahlung auf. Bevorzugt handelt es sich dabei um sichtbare Strahlung, jedoch kann allgemein jede Art von elektromagnetischer Strahlung eingesetzt werden.

Im Strahlengang des Lesestrahls 4 ist ein Speichermedium 6 angeordnet, wobei der Lesestrahl 4 die vom Hologrammeingenommene Fläche 8 zumindest teilweise, vorzugsweise vollständig ausleuchtet. Dazu wird der Lesestrahl 4 mit Hilfe einer nicht dargestellten an sich bekannten Optik so weit aufgeweitet, dass der Lesestrahl 4 einen ausreichenden Durchmesser aufweist. In Fig. 9 sowie in den weiteren Figuren sind die Strahlen der Einfachheit nur als Striche und Pfeile dargestellt worden. Dadurch wird auch die Übersichtlichkeit verbessert. Es wird jedoch betont, dass es sich um rein schematische Darstellungen handelt.

Des Weiteren sind im Strahlengang des vom Hologramm abgelenkten Strahls 9 Aufnahmemitteln 10 zum Aufnehmen des vom Hologramm erzeugten Bildes vorgesehen. Dabei handelt es sich bevorzugt um ein CCD-Array zur direkten Aufnahme und elektronischer Weiterverarbeitung der Bildinformation. Ebenso kann ein Schirm genutzt werden, auf dem die Rekonstruktion des Hologramms dargestellt ist.

Esist ein optisches System für ein Erfassen der Punkteverteilung der vom Hologramm eingenommenen Fläche 8 vorgesehen, wodurch die makroskopische Überstruktur erfasst und ausgewertet werden kann.

Im vorliegenden Ausführungsbeispiel weist das optische System eine Abbildungsoptik in Form einer Linse 12 und zweite Aufnahmemittel 14 auf. Diese können wie schon die ersten Aufnahmemittel 10 ebenfalls als CCD-Array oder als Schirm ausgebildet sein.

Die Abbildungsoptik 12 ist für ein Abbilden der Punkteverteilung der vom Hologramm eingenommenen Fläche 8 vorgesehen und die zweiten Aufnahmemittel 14 dienen einem Aufnehmen und weiteren Verarbeitung der Punkteverteilung, aus der sich die makroskopische Überstruktur ergibt.

Wie Fig. 9 zeigt, ist im Strahlengang des Lesestrahls 4 ein Strahlteiler 16 zum Ablenken des reflektierten Strahls 18 auf die Abbildungsoptik 12 vorgesehen. Diese Anordnung wird hauptsächlich dann genutzt, wenn der Lesestrahl 4 imWesentlichen senkrecht zur Oberfläche des Speichermediums 6 ausgerichtet ist und der reflektierte Strahl 18 im Wesentlichen antiparallel zum Lesestrahl 4 verläuft.

Fig. 10 zeigt ein zweites Ausführungsbeispiel einer Vorrichtung zum Auslesen eines in einem Speichermedium 6 gespeicherten Hologramms, wobei gleiche Bezugszeichen gleiche Elemente wie beim ersten Ausführungsbeispiel kennzeichnen.

Die ersten Aufnahmemittel 10 weisen mindestens zwei voneinander getrennte Aufnahmebereiche 10a und 10b für ein Aufnehmen von mindestens zwei räumlich getrennten Rekonstruktionen des Hologramms auf. Die unterschiedlichen Rekonstruktionen von einem oder zwei verschiedenen computergenerierten Hologrammen können somit separat erfasst und ausgewertet werden.

Hervorzuheben ist bei dem zweiten Ausführungsbeispiel, dass ein Lesestrahl 4 ausreicht um sämtliche Informationen auszulesen, also sowohl die makroskopische Überstruktur als auch zwei verschiedene holographische Informationen.

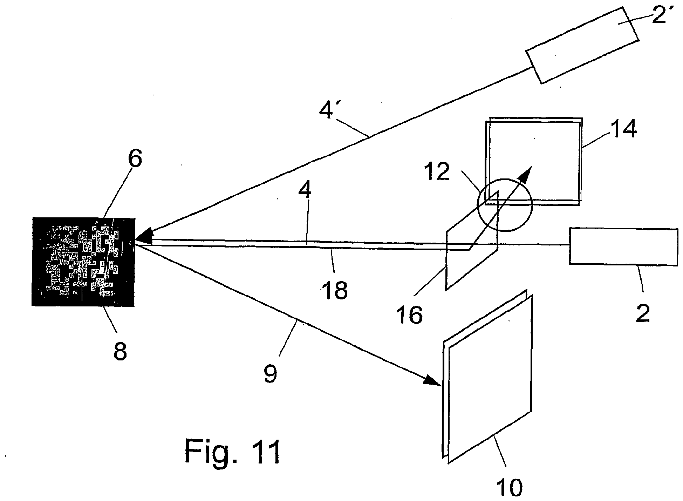

Fig. 11 zeigt ein drittes Ausführungsbeispiel einer Vorrichtung zum Auslesen eines in einem Speichermedium 6 gespeicherten Hologramms, wobei gleiche Bezugszeichen gleiche Elemente wie bei den ersten beiden Ausführungsbeispielen kennzeichnen.

In diesem Ausführungsbeispiel sind zwei verschiedene Strahlungsquellen 2 und 2' vorgesehen, die einerseits für das Auslesen der makroskopischen Überstruktur vorgesehen sind und andererseits das Auslesen der holographischen Information ermöglichen. Dazu werden zwei, vorzugsweise aufgeweitete Lesestrahlen 4 und 4' auf die von der im Speichermedium 6 eingeschriebenen Punkteverteilung 8 gerichtet. Die bereits oben beschriebenen Aufbauten, die zu den Aufnahmemitteln 10 und 14 gehören, werden dann entsprechend eingesetzt. Der Vorteil dieses Aufbaus besteht darin, dass die Lesestrahlen 4 und 4' jeweils optimal an die Lesebedingungen für das Auslesen der makroskopischen Überstruktur und der holographischen Information, insbesondere in Bezug auf den Einfallswinkel eingerichtet werden können. Bevorzugt wird dabei der Lesestrahl für das Auslesen der makroskopischen Überstruktur so eingestellt, dass beispielsweise die Flächen eines 2D-Barcodes besonders kontrastreich auf die Aufnahmemittel abgebildet werden.

Die zusätzliche Strahlungsquelle kann auch im Vergleich zum ersten Ausführungsbeispiel für das Auslesen eines zweiten Hologramms eingesetzt werden. In diesem in den Figuren nicht dargestellten Fall sind zwei Aufnahmemittel für das Aufnehmen von holographischen Informationen vorgesehen, wobei ein erstes Aufnahmemittel die Rekonstruktion durch den ersten Lesestrahl und das zweite Aufnahmemittel die Rekonstruktion durch den zweiten Lesestrahl aufnehmen.

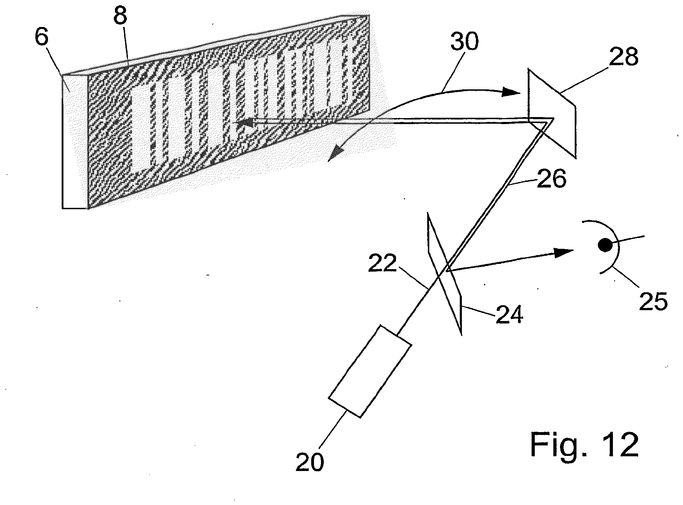

Fig. 12 zeigt ein viertes Ausführungsbeispiel einer Vorrichtung zum Auslesen eines in einem Speichermedium gespeicherten Hologramms, wobei gleiche Bezugszeichen gleiche Elemente wie bei den ersten drei Ausführungsbeispielen kennzeichnen.

Die auf dem Speichermedium eingeschriebene Punkteverteilung weist als makroskopische Überstruktur einen 1D-Barcode auf, der abwechselnde helle bzw. weiße Streifen und dunklere, die holographische Information enthaltende Streifen aufweist. Die eindimensionale Information kann durch ein Abscannen mit einem Lesestrahl in herkömmlicher Weise erfasst werden, daher kommen alle aus dem Stand der Technik bekannten Formen von Barcode-Lesevorrichtungen für diese Aufgabe in Frage.

In der Darstellung der Fig. 12 ist der optische Aufbau zum Auslesen der holographischen Information weggelassen worden, der die Strahlungsquelle 2, den aufgeweiteten Lesestrahl 4 und die Aufnahmemittel 10 wie in den vorangegangen beschriebenen Ausführungsbeispielen umfasst. Dagegen ist der weitere Aufbau des optischen Systems für den Barcodescanner dargestellt.

Das optische System weist eine zweite Strahlungsquelle 20 zum Erzeugen eines zweiten Lesestrahls 22 aus elektromagnetischer Strahlung auf. Im Strahlengang des zweiten Lesestrahls 22 ist ein Strahlteiler 24 angeordnet, der den reflektierten Strahl 26 auf einen lichtempfindlichen Detektor 25 lenkt.

Im Prinzip reicht dieser Aufbau aus, um den 1D-Barcode zu lesen, wenn das Speichermedium quer zum zweiten Lesestrahl bewegt wird.

Des Weiteren kann auch eine Scanvorrichtung in Form eines Scanspiegels 28 vorgesehen sein, wobei der Scanspiegel 28 für ein Scannen des zweiten Lesestrahls 22 über die Punkteverteilung der vom Hologramm eingenommenen Fläche 8 vorgesehen ist. Die Scanbewegung ist mit dem Doppelpfeil 30 dargestellt und verläuft im Wesentlichen senkrecht zu den Linien des 1D-Barcodes der makroskopischen Überstruktur.

## Patentansprüche

1. Verfahren zum Berechnen und Verknüpfen einer makroskopischen Überstruktur und eines computergenerierten Hologramms,
- bei dem die Punkteverteilung des computergenerierten Hologramms berechnet wird,
- bei dem eine direkt lesbare makroskopische Überstruktur als 1D- oder 2D-Barcode, als Mikroschrift, als Bild, als Logo, als kodierte Matrix oder als eine Mischung von mindestens zwei der vorgenannten Überstrukturtypen vorliegt,
- bei dem die Punkteverteilung der makroskopischen Überstruktur berechnet wird und
- bei dem die Punkteverteilung des computergenerierten Hologramms mit der Punkteverteilung der makroskopischen Überstruktur zu einer in einem Speichermedium zu schreibenden Punkteverteilung unter Anwendung einer AND-Verknüpfung verknüpft wird, so dass dann ein Punkt in der zu schreibenden Punkteverteilung gesetzt wird, wenn sowohl in der Punkteverteilung des computergenerierten Hologramms als auch in der Punkteverteilung der makroskopischen Überstruktur an der gleichen Position ein Punkt vorhanden ist, oder einer NAND-Verknüpfung verknüpft wird, so dass dann ein Punkt in der zu schreibenden Punkteverteilung ausgelassen wird, wenn dieser Punkt sowohl in der Punkteverteilung der makroskopischen Überstruktur als auch in der Punkteverteilung des computergenerierten Hologramms in der gleichen Position vorhanden ist, oder einer OR Verknüpfung verknüpft wird, so dass dann einen Punkt in der zu schreibenden Punkteverteilung gesetzt wird, wenn entweder in der Punkteverteilung des computergenerierten Hologramms oder in der Punkteverteilung der makroskopischen Überstruktur an der gleichen Position ein Punkt vorhanden ist, oder eine NOR-Verknüpfung verknüpft wird, so dass dann ein Punkt in der zu schreibenden Punkteverteilung ausgelassen wird, wenn entweder in der Punkteverteilung des computergenerierten Hologramms oder in der Punkteverteilung der makroskopischen Überstruktur an der gleichen Position ein Punkt vorhanden ist.

2. Verfahren nach Anspruch 1,
bei dem die Punkteverteilung der makroskopischen Überstruktur selbst zumindest teilweise eine Punkteverteilung eines weiteren computergenerierten Hologramms aufweist.

3. Verfahren nach Anspruch 1 oder 2,
bei dem für eine Optimierung der Punkteverteilung des Hologramms der in das Speichermedium zu schreibenden Punkteverteilung ein iterativer Fourier-Transformationsalgorithmus, vorzugsweise ein Gradual and Random Binarization Algorithmus, angewendet wird.

4. Verfahren zum Erzeugen einer Verknüpfung der Punkteverteilungen einer makroskopischen Überstruktur und eines computergenerierten Hologramms in einem Speichermedium,
- bei dem eine Verknüpfung einer makroskopischen Überstruktur und eines computergenerierten Hologramms nach einem der Ansprüche 1 bis 3 berechnet wird,
- bei dem ein Schreibstrahl auf das Speichermedium fokussiert und zweidimensional relativ zum Speichermedium bewegt wird und
- bei dem die zu schreibende Punkteverteilung durch punktweises Einbringen von Strahlungsenergie geschrieben wird, wobei die Intensität des Schreibstrahls in Abhängigkeit von der Position des Schreibstrahls auf dem Speichermedium gesteuert wird.

5. Verfahren nach Anspruch 4,
bei dem der Schreibstrahl relativ zu einem feststehenden Speichermedium bewegt wird.

6. Verfahren nach Anspruch 4 oder 5,
bei dem bei feststehendem Schreibstrahl das zu beschreibende Medium bewegt wird.

## Claims

1. Method for calculating and combining a macroscopic superstructure and a computer-generated hologram,
- in which the point distribution of the computer-generated hologram is calculated,
- in which a directly readable macroscopic superstructure is in the form of a 1D or 2D barcode, in the form of microprint, in the form of an image, in the form of a logo, in the form of a coded matrix or in the form of a mixture of at least two of the above-mentioned superstructure types,
- in which the point distribution of the macroscopic superstructure is calculated, and
- in which the point distribution of the computer-generated hologram is combined with the point distribution of the macroscopic superstructure, to form a point distribution to be written in a storage medium, using an AND combination, with the result that a point is set in the point distribution to be written when a point is present at the same position both in the point distribution of the computer-generated hologram and in the point distribution of the macroscopic superstructure, or is combined using a NAND combination, with the result that a point is omitted in the point distribution to be written if this point is present at the same position both in the point distribution of the macroscopic superstructure and in the point distribution of the computer-generated hologram, or is combined using an OR combination, with the result that a point is set in the point distribution to be written when a point is present at the same position either in the point distribution of the computer-generated hologram or in the point distribution of the macroscopic superstructure, or is combined using a NOR combination, with the result that a point is omitted in the point distribution to be written when a point is present at the same position either in the point distribution of the computer-generated hologram or in the point distribution of the macroscopic superstructure.

2. Method according to Claim 1,
in which the point distribution of the macroscopic superstructure itself at least partially has a point distribution of a further computer-generated hologram.

3. Method according to Claim 1 or 2,
in which an iterative Fourier transform algorithm, preferably a gradual and random binarization algorithm, is used to optimize the point distribution of the hologram of the point distribution to be written to the storage medium.

4. Method for combining the point distributions of a macroscopic superstructure and of a computer-generated hologram in a storage medium,
- in which a combination of a macroscopic superstructure and of a computer-generated hologram is calculated according to one of Claims 1 to 3,
- in which a writing beam is focused on the storage medium and is moved in a two-dimensional manner relative to the storage medium, and
- in which the point distribution to be written is written by introducing radiation energy point-by-point, wherein the intensity of the writing beam is controlled on the basis of the position of the writing beam on the storage medium.

5. Method according to Claim 4,
in which the writing beam is moved relative to a stationary storage medium.

6. Method according to Claim 4 or 5,
in which the medium to be written to is moved in the case of a stationary writing beam.

## Revendications

1. Procédé de calcul et de liaison d'une superstructure macroscopique et d'un hologramme créé par ordinateur,
- dans lequel on calcule la distribution des points de l'hologramme créé par ordinateur,
- dans lequel il existe une superstructure macroscopique directement lisible, comme code-barres 1D ou 2D, comme micro-écriture, comme image, comme logo, comme matrice codée ou comme un mélange d'au moins deux des types de superstructures précités,
- dans lequel on calcule la distribution des points de la superstructure macroscopique, et
- dans lequel on lie la distribution des points de l'hologramme créé par ordinateur avec la distribution des points de la superstructure macroscopique en une distribution des points à écrire dans un support de mémoire en utilisant une liaison AND, de telle manière qu'un point soit placé dans la distribution des points à écrire, lorsqu'un point se trouve à la même position aussi bien dans la distribution des points de l'hologramme créé par ordinateur que dans la distribution des points de la superstructure macroscopique, ou on lie une liaison NAND, de telle manière qu'un point soit exclu dans la distribution des points à écrire lorsque ce point se trouve à la même position aussi bien dans la distribution des points de la superstructure macroscopique que dans la distribution des points de l'hologramme créé par ordinateur, ou on lie une liaison OR, de telle manière qu'un point soit placé dans la distribution des points à écrire, lorsqu'un point se trouve à la même position soit dans la distribution des points de l'hologramme créé par ordinateur soit dans la distribution des points de la superstructure macroscopique, ou on lie une liaison NOR, de telle manière qu'un point soit exclu dans la distribution des points à écrire lorsqu'un point se trouve à la même position soit dans la distribution des points de l'hologramme créé par ordinateur soit dans la distribution des points de la superstructure macroscopique.

2. Procédé selon la revendication 1, dans lequel la distribution des points de la superstructure macroscopique elle-même présente au moins partiellement une distribution des points d'un autre hologramme créé par ordinateur.

3. Procédé selon la revendication 1 ou 2, dans lequel pour une optimisation de la distribution des points de l'hologramme de la distribution des points à écrire dans le support de mémoire, on utilise un algorithme itératif de transformée de Fourier, de préférence un algorithme de binarisation graduel et aléatoire.

4. Procédé de production d'une liaison des distributions des points d'une superstructure macroscopique et d'un hologramme créé par ordinateur dans un support de mémoire,
- dans lequel on calcule une liaison d'une superstructure macroscopique et d'un hologramme créé par ordinateur selon l'une quelconque des revendications 1 à 3,
- dans lequel on focalise un faisceau d'écriture sur le support de mémoire et on le déplace en deux dimensions par rapport au support de mémoire, et
- dans lequel on écrit la distribution des points à écrire par apport ponctuel d'énergie de rayonnement, dans lequel on commande l'intensité du faisceau d'écriture en fonction de la position du faisceau d'écriture sur le support de mémoire.

5. Procédé selon la revendication 4, dans lequel on déplace le faisceau d'écriture par rapport à un support de mémoire immobile.

6. Procédé selon la revendication 4 ou 5, dans lequel on déplace le support d'écriture par rapport à un faisceau d'écriture immobile.
